# EUROPEAN PATENT APPLICATION

(11) **EP 4 560 995 A1**
(43) Date of publication of application: **28.05.2025**
(21) Application number: 22951518.4
(22) Date of filing: 20.07.2022
(51) Int. Cl.: H04L 27/00

(54) **CELL CONFIGURATION METHOD AND APPARATUS, DEVICE AND STORAGE MEDIUM**

(71) Applicant: Beijing Xiaomi Mobile Software Co., Ltd., Beijing 100085 (CN)
(72) Inventor: WU, Yumin, Beijing 100085 (CN)
(74) Representative: Stöckeler, Ferdinand
(86) International application number: PCT/CN2022/106894
(87) International publication number: WO 2024/016241

(57) **Abstract**

The present disclosure provides a cell configuration method and apparatus, a device, and a storage medium. The method comprises: indicating to a terminal device the configuration information of at least one candidate cell; sending change signaling to the terminal device, the change signaling being used for at least one of: activating or deactivating the configuration information of at least one candidate cell; changing the specific configuration content corresponding to the configuration information of the at least one candidate cell. The method provided by the invention allows for rapidly changing the configuration information of a candidate cell, and allows a network device and a terminal device to have a consistent understanding of the post-change candidate cell configuration information.

## Description

### FIELD

The present disclosure relates to the field of communication technologies, and in particular to a method and apparatus for cell configuration, devices and a storage medium.

### BACKGROUND

In a communication system, a network device usually indicates configuration information of a candidate cell to a terminal device. The configuration information may include an activation state and/or a cell type of the candidate cell. In order to meet the network requirements, the network device will subsequently transmit a signaling for changing the configuration information of the candidate cell to the terminal device. However, how to quickly change the configuration information of the candidate cell and how to make the terminal device and the network device consistently understand the configuration information of the candidate cell after the change are issues that need to be solved urgently.

### SUMMARY

The present disclosure provides a method and apparatus for cell configuration, devices and a storage medium, to quickly change configuration information of a candidate cell and ensure that a terminal device and a network device have a consistent understanding of the configuration information of the candidate cell after the change.

In a first aspect, an embodiment of the present disclosure provides a method for cell configuration, which is performed by a network device and includes:
indicating at least one piece of candidate cell configuration information to a terminal device; and
transmitting a change signaling to the terminal device, where the change signaling is used for at least one of:
   activating or deactivating the at least one piece of candidate cell configuration information; or
   changing specific configuration content corresponding to the at least one piece of candidate cell configuration information.

In the present disclosure, the method for cell configuration is provided. The network device may indicate at least one piece of candidate cell configuration information to the terminal device, and may transmit the change signaling to the terminal device, where the change signaling is used for activating or deactivating the at least one piece of candidate cell configuration information; and/or changing the specific configuration content corresponding to the at least one piece of candidate cell configuration information. In other words, in the embodiments of the present disclosure, the network device instructs the terminal device to change the candidate cell configuration information by transmitting the change signaling to the terminal device, so as to quickly change the candidate cell configuration information. In the embodiments of the present disclosure, when the network device instructs the terminal device to change the candidate cell configuration information via the change signaling, the network device and the terminal device can have a common understanding of a candidate cell to be changed, and an activation state to be changed to and/or specific configuration content to be changed to of the candidate cell to be changed based on the change signaling, so as to ensure the network device and the terminal device to have a consistent understanding of candidate cell configuration information after the change.

Optionally, the method further includes: configuring an associated cell identifier for the at least one piece of candidate cell configuration information, to associate the at least one piece of candidate cell configuration information with a candidate cell corresponding to the associated cell identifier.

Optionally, a plurality of candidate cell configuration information are associated with the same cell identifier.

Optionally, each candidate cell configuration information is associated with a unique cell identifier

Optionally, the method further includes: indicating spatial relationship configuration to the terminal device, where the spatial relationship configuration includes at least one first indication information used to indicate a candidate cell.

Optionally, the first indication information includes at least one of:
a cell identifier corresponding to the candidate cell;
a cell type identifier corresponding to the candidate cell;
a secondary cell (SCell) identifier corresponding to the candidate cell with a cell type of SCell;
a candidate cell group identifier corresponding to the candidate cell;
a frequency point corresponding to the candidate cell; or
a physical cell identifier corresponding to the candidate cell.

Optionally, the specific configuration content corresponding to the at least one piece of candidate cell configuration information includes a cell type and/or a cell configuration activation state corresponding to the at least one piece of candidate cell configuration information.

Optionally, the method further includes:
transmitting default configuration information corresponding to the at least one piece of candidate cell configuration information to the terminal device, where the default configuration information is used to indicate a default cell type and/or a default cell configuration activation state corresponding to the at least one piece of candidate cell configuration information; and
transmitting additional configuration information corresponding to the at least one piece of candidate cell configuration information to the terminal device, where the additional configuration information includes a cell type and/or a cell configuration activation state corresponding to the at least one piece of candidate cell configuration information indicated by the network device,
where the default configuration information and/or the additional configuration information are included in the at least one piece of candidate cell configuration information; or the default configuration information and/or the additional configuration information are additionally configured to the terminal device.

Optionally, the cell type includes at least one of:
primary cell (PCell);
primary secondary cell (PSCell);
special cell (SpCell);
secondary cell (SCell);
master cell group secondary cell (MCG SCell); or
secondary cell group secondary cell (SCG SCell),
where the cell configuration activation state includes activation or deactivation.

Optionally, in response to the at least one piece of candidate cell configuration information corresponding to the default configuration information, the cell type corresponding to the at least one piece of candidate cell configuration information is implicitly indicated as being unable to be changed.

Optionally, the change signaling includes at least one of: a layer 1 (L1) signaling; or a layer 2 (L2) signaling.

Optionally, the change signaling includes at least one of:
at least one second indication information used to indicate the at least one piece of candidate cell configuration information to be changed;
an activation state to be changed to and corresponding to the at least one piece of candidate cell configuration information to be changed; or
specific configuration content to be changed to and corresponding to the at least one piece of candidate cell configuration information to be changed, where the specific configuration content to be changed to includes a cell type to be changed to and/or a cell configuration activation state to be changed to.

Optionally, one candidate cell is associated with at least one piece of candidate cell configuration information, each candidate cell configuration information corresponds to one configuration identifier, and each candidate cell corresponds to one cell identifier; different candidate cells correspond to different cell identifiers, different candidate cell configuration information associated with one candidate cell correspond to different configuration identifiers, and candidate cell configuration information associated with different candidate cells correspond to the same configuration identifier or different configuration identifiers.

Optionally, the second indication information includes a configuration identifier corresponding to the at least one piece of candidate cell configuration information to be changed; or the second indication information includes a configuration identifier corresponding to the at least one piece of candidate cell configuration information to be changed and a cell identifier associated with the at least one piece of candidate cell configuration information to be changed; or the second indication information includes a cell identifier associated with the at least one piece of candidate cell configuration information to be changed.

Optionally, the method further includes: in response to the activation state to be changed to corresponding to the at least one piece of candidate cell configuration information to be changed being activation, indicating that a candidate cell associated with the at least one piece of candidate cell configuration information activated is managed based on the at least one piece of candidate cell configuration information activated; and in response to the activation state to be changed to corresponding to the at least one piece of candidate cell configuration information to be changed being deactivation, indicating that a candidate cell associated with the at least one piece of candidate cell configuration information deactivated is managed not based on the at least one piece of candidate cell configuration information deactivated.

In a second aspect, an embodiment of the present disclosure provides a method for cell configuration, which is performed by a terminal device and includes:
receiving at least one piece of candidate cell configuration information indicated by a network device;
receiving a change signaling transmitted by the network device, where the change signaling is used for at least one of: activating or deactivating the at least one piece of candidate cell configuration information; or changing specific configuration content corresponding to the at least one piece of candidate cell configuration information; and
activating or deactivating the at least one piece of candidate cell configuration information based on the change signaling, and/or changing the specific configuration content corresponding to the at least one piece of candidate cell configuration information based on the change signaling.

Optionally, the method further includes: receiving an associated cell identifier configured by the network device for the at least one piece of candidate cell configuration information.

Optionally, a plurality of candidate cell configuration information are associated with the same cell identifier.

Optionally, each candidate cell configuration information is associated with a unique cell identifier.

Optionally, the method further includes: receiving a spatial relationship configuration indicated by the network device, where the spatial relationship configuration includes at least one first indication information used to indicate a candidate cell.

Optionally, the first indication information includes at least one of:
a cell identifier corresponding to the candidate cell;
a cell type identifier corresponding to the candidate cell;
a secondary cell (SCell) identifier corresponding to the candidate cell with a cell type of SCell;
a candidate cell group identifier corresponding to the candidate cell;
a frequency point corresponding to the candidate cell; or
a physical cell identifier corresponding to the candidate cell.

Optionally, the method further includes: changing the first indication information corresponding to the at least one candidate cell in the spatial relationship configuration based on the change signaling.

Optionally, the specific configuration content corresponding to the at least one piece of candidate cell configuration information includes a cell type and/or a cell configuration activation state corresponding to the at least one piece of candidate cell configuration information.

Optionally, the method further includes:
receiving default configuration information corresponding to the at least one piece of candidate cell configuration information, where the default configuration information is used to indicate a default cell type and/or a default cell configuration activation state corresponding to a candidate cell; and
receiving additional configuration information corresponding to the at least one piece of candidate cell configuration information, where the additional configuration information includes a cell type and/or a cell configuration activation state corresponding to the at least one piece of candidate cell configuration information indicated by the network device,
where the default configuration information and/or the additional configuration information are included in the at least one piece of candidate cell configuration information; or the default configuration information and/or the additional configuration information are additionally configured to the terminal device.

Optionally, in an embodiment of the present disclosure, the cell type includes at least one of: PCell; PSCell; SpCell; SCell; MCG SCell; or SCG SCell, where the cell configuration activation state includes activation or deactivation.

Optionally, in response to the at least one piece of candidate cell configuration information corresponding to the default configuration information, the cell type corresponding to the at least one piece of candidate cell configuration information is implicitly indicated to be unable to be changed.

Optionally, the change signaling includes at least one of: an L1 signaling; or an L2 signaling.

Optionally, the change signaling includes at least one of:
at least one second indication information used to indicate the at least one piece of candidate cell configuration information to be changed;
an activation state to be changed to and corresponding to the at least one piece of candidate cell configuration information to be changed; or
specific configuration content to be changed to and corresponding to the at least one piece of candidate cell configuration information to be changed, where the specific configuration content to be changed to includes a cell type to be changed to and/or a cell configuration activation state to be changed to.

Optionally, one candidate cell is associated with at least one piece of candidate cell configuration information, each candidate cell configuration information corresponds to one configuration identifier, and each candidate cell corresponds to one cell identifier; different candidate cells correspond to different cell identifiers, different candidate cell configuration information associated with one candidate cell correspond to different configuration identifiers, and candidate cell configuration information associated with different candidate cells correspond to the same configuration identifier or different configuration identifiers.

Optionally, the second indication information includes a configuration identifier corresponding to the at least one piece of candidate cell configuration information to be changed; or the second indication information includes a configuration identifier corresponding to the at least one piece of candidate cell configuration information to be changed and a cell identifier associated with the at least one piece of candidate cell configuration information to be changed; or the second indication information includes a cell identifier associated with the at least one piece of candidate cell configuration information to be changed.

Optionally, the activating or deactivating the at least one piece of candidate cell configuration information based on the change signaling includes at least one of:
in response to the activation state to be changed to corresponding to the at least one piece of candidate cell configuration information to be changed being activation, managing a candidate cell associated with the at least one piece of candidate cell configuration information activated based on the at least one piece of candidate cell configuration information activated; or
in response to the activation state to be changed to corresponding to the at least one piece of candidate cell configuration information to be changed being deactivation, managing a candidate cell associated with the at least one piece of candidate cell configuration information deactivated not based on the at least one piece of candidate cell configuration information deactivated.

In a third aspect, an embodiment of the present disclosure provides a communication device, which is configured in a network device and includes: a transceiver module, configured to indicate at least one piece of candidate cell configuration information to a terminal device; and transmit a change signaling to the terminal device, where the change signaling is used for at least one of: activating or deactivating the at least one piece of candidate cell configuration information; or changing specific configuration content corresponding to the at least one piece of candidate cell configuration information.

In a fourth aspect, embodiments of the present disclosure provide a communication device, which is configured in a terminal device and includes:
a transceiver module, configured to receive at least one piece of candidate cell configuration information indicated by a network device; and receive a change signaling transmitted by the network device, where the change signaling is used for at least one of: activating or deactivating the at least one piece of candidate cell configuration information; or changing specific configuration content corresponding to the at least one piece of candidate cell configuration information; and
a processing module, configured to activate or deactivate the at least one piece of candidate cell configuration information based on the change signaling, and/or change the specific configuration content corresponding to the at least one piece of candidate cell configuration information based on the change signaling.

In a fifth aspect, an embodiment of the present disclosure provides a communication device. The communication device includes a processor. When invoking a computer program in a memory, the processor is configured to execute the method described in the above first aspect.

In a sixth aspect, an embodiment of the present disclosure provides a communication device. The communication device includes a processor. When invoking a computer program in a memory, the processor is configured to execute the method described in the above second aspect.

In a seventh aspect, an embodiment of the present disclosure provides a communication device. The communication device includes a processor and a memory. A computer program is stored in the memory. The processor is configured to execute the computer program stored in the memory to cause the communication device to perform the method described in the above first aspect.

In an eighth aspect, an embodiment of the present disclosure provides a communication device. The communication device includes a processor and a memory. A computer program is stored in the memory. The processor is configured to execute the computer program stored in the memory to cause the communication device to perform the method described in the above second aspect.

In a ninth aspect, an embodiment of the present disclosure provides a communication device, which includes a processor and an interface circuit. The interface circuit is configured to receive code instructions and transmit them to the processor. The processor is configured to execute the code instructions to cause the device to execute the method described in the above first aspect.

In a tenth aspect, an embodiment of the present disclosure provides a communication device, which includes a processor and an interface circuit. The interface circuit is configured to receive code instructions and transmit them to the processor. The processor is configured to execute the code instructions to cause the device to execute the method described in the above second aspect.

In an eleventh aspect, an embodiment of the present disclosure provides a communication system. The system includes the communication device according to the third aspect and the communication device according to the fourth aspect, or the system includes the communication device according to the fifth aspect and the communication device according to the sixth aspect, or the system includes the communication device according to the seventh aspect and the communication device according to the eighth aspect, or the system includes the communication device according to the ninth aspect and the communication device according to the tenth aspect.

In a twelfth aspect, an embodiment of the present disclosure provides a computer-readable storage medium, configured to store instructions used by the above-mentioned network device and/or the above-mentioned terminal device. The instructions, when executed, cause the network device to execute the method described in the above first aspect, and/or cause the terminal device to perform the method described in the above second aspect.

In a thirteenth aspect, the present disclosure further provides a computer program product including a computer program, which, when running on a computer, causes the computer to execute the method described in any one of the above first and second aspects.

In a fourteenth aspect, the present disclosure provides a chip system. The chip system includes at least one processor and an interface for supporting the network device to implement the functions involved in the first aspect, and/or supporting the terminal device to implement the functions involved in the second aspect, for example, determining or processing at least one of data or information involved in the above method. In a possible design, the chip system further includes a memory, and the memory is configured to store necessary computer programs and data for a source secondary node. The chip system may be composed of chips, or may include a chip and other discrete devices.

In a fifteenth aspect, the present disclosure provides a computer program that, when running on a computer, causes the computer to perform the method described in any one of the above first and second aspects.

### BRIEF DESCRIPTION OF THE DRAWINGS

The above and/or additional aspects and advantages of the present disclosure will become apparent and readily understood from the following description of the embodiments in conjunction with the accompanying drawings, in which:
FIG. 1 is a schematic architectural diagram of a communication system provided by an embodiment of the present disclosure;
FIG. 2 is a schematic flowchart of a method for cell configuration provided by another embodiment of the present disclosure;
FIG. 3 is a schematic flowchart of a method for cell configuration provided by another embodiment of the present disclosure;
FIG. 4 is a schematic flowchart of a method for cell configuration provided by another embodiment of the present disclosure;
FIG. 5a to FIG. 5c each is a flowchart of a method for cell configuration provided by another embodiment of the present disclosure;
FIG. 6 is a schematic flowchart of a method for cell configuration provided by another embodiment of the present disclosure;
FIG. 7 is a schematic flowchart of a method for cell configuration provided by another embodiment of the present disclosure;
FIG. 8 is a schematic flowchart of a method for cell configuration provided by another embodiment of the present disclosure;
FIG. 9 is a schematic flowchart of a method for cell configuration provided by another embodiment of the present disclosure;
FIG. 10 is a schematic flowchart of a method for cell configuration provided by another embodiment of the present disclosure;
FIG. 11a to FIG. 11b each is a schematic flowchart of a method for cell configuration provided by another embodiment of the present disclosure;
FIG. 12 is a schematic structural diagram of a communication device provided by an embodiment of the present disclosure;
FIG. 13 is a schematic structural diagram of a communication device provided by another embodiment of the present disclosure;
FIG. 14 is a block diagram of a communication device provided by an embodiment of the present disclosure; and
FIG. 15 is a schematic structural diagram of a chip provided by an embodiment of the present disclosure.

### DETAILED DESCRIPTION

Exemplary embodiments will be described in detail herein, examples of which are illustrated in the accompanying drawings. The following description refers to the accompanying drawings in which the same numbers in different drawings refer to the same or similar elements unless otherwise indicated. The implementations set forth in the following description of illustrative embodiments do not represent all implementations consistent with the embodiments of the present disclosure. They are merely examples of apparatuses and methods consistent with some aspects of the embodiments of the present disclosure as recited in the appended claims.

Terms used in the embodiments of the present disclosure are only for the purpose of describing specific embodiments, and shall not be construed to limit the present disclosure. As used in the embodiments of the present disclosure and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

It should be understood that although terms such as "first", "second" and "third" may be used in the embodiments of the present disclosure for describing various information, these information should not be limited by these terms. These terms are only used for distinguishing information of the same type from others. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.

The embodiments of the present disclosure will be described in detail below, and examples of the embodiments are illustrated in the accompanying drawings, where the same or similar reference signs refer to the same or similar elements throughout the specification. The embodiments described below with reference to the accompanying drawings are exemplary and are intended to explain the present disclosure, but should not be construed to limit the present disclosure.

To facilitate understanding, terminologies involved in the present application are first introduced.

### 1. Candidate cell

Before handover of a mobile communication system, a signal in a channel of a candidate serving cell gradually weakens, and a signal in a channel of some adjacent candidate cells is enhanced to a certain threshold value to maintain normal communication. These adjacent candidate cells are referred to as candidate cells.

In order to better understand a method for determining a duration of a sidelink disclosed in embodiments of the present application, a communication system to which the embodiments of the present application is applicable is first described below.

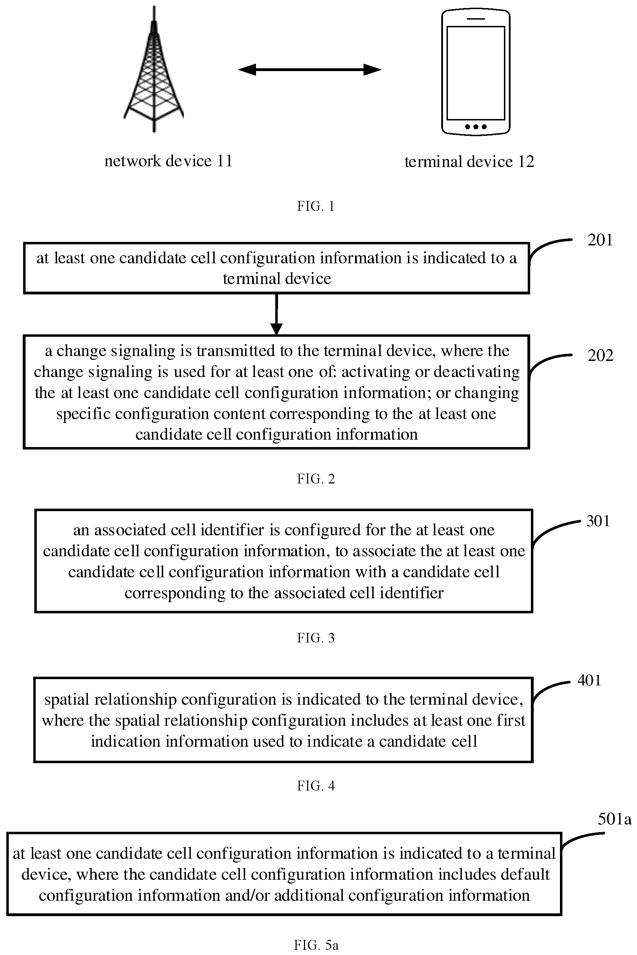

Referring to FIG. 1, FIG. 1 is a schematic architectural diagram of a communication system provided by an embodiment of the present disclosure. The communication system may include, but not limited to, one network device and one terminal device. The number and form of devices shown in FIG. 1 are only for examples and do not constitute a limitation onto the embodiments of the present disclosure. In actual applications, the system may include two or more of network devices mentioned above, and two or more of terminal devices mentioned above. The communication system shown in FIG. 1 includes one network device 11 and one terminal device 12, which is taken as an example.

It should be noted that the technical solutions of the embodiments of the present disclosure may be applied to various communication systems, for example: long term evolved (LTE) system, 5th generation (5G) mobile communication system, 5G new radio (NR) system, or other future new mobile communication systems.

The network device 11 in the embodiments of the present disclosure is an entity on the network side for receiving or transmitting signals. For example, the network device 11 may be an evolved NodeB (eNB), a transmission reception point (TRP), a next generation NodeB (gNB) in an NR system, a base station in other future mobile communication systems, an access node in a wireless fidelity (WiFi) system, or the like. The specific technique and the specific device form used by the network device are not limited in the embodiments of the present disclosure. The network device provided by the embodiments of the present disclosure may include a centralized unit (CU) and a distributed unit (DU). The CU may also be referred to as a control unit. Protocol layers of the network device, for example, a base station, may be split by means of the structure of CU-DU, where functions of some protocol layers are arranged on the CU for centralized control, some or all of functions of the remaining protocol layers are distributed in the DU, and the CU centrally controls the DU.

The terminal device 12 in the embodiments of the present disclosure may be an entity on the user side for receiving or transmitting signals, such as a mobile phone. The terminal device may also be referred to as terminal, user equipment (UE), mobile station (MS), mobile terminal (MT), etc. The terminal device may be a car with communication functions, a smart car, a mobile phone, a wearable device, a tablet computer (Pad), a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in smart city, a wireless terminal device in smart home, etc. The specific technique and the specific device form used by the terminal device are not limited in the embodiments of the present disclosure.

It will be appreciated that the communication system described in the embodiments of the present disclosure is to more clearly illustrate the technical solutions of the embodiments of the present disclosure, and does not constitute a limitation on the technical solutions provided by the embodiments of the present disclosure. As those of ordinary skill in the art will know, with the evolution of the system architecture and the emergence of new service scenarios, the technical solutions provided by the embodiments of the present disclosure are also applicable to similar technical problems.

The method and apparatus for cell configuration, devices and a storage medium provided by embodiments of the present disclosure will be described in detail below with reference to the accompanying drawings.

FIG. 2 is a schematic flowchart of a method for cell configuration provided by an embodiment of the present disclosure. The method is performed by a network device. As shown in FIG. 2, the method for cell configuration may include the following steps.

In step 201, at least one piece of candidate cell configuration information is indicated to a terminal device.

In an embodiment of the present disclosure, the candidate cell configuration information may include a time-frequency resource corresponding to a candidate cell, a configuration identifier corresponding to the candidate cell configuration information, etc. Further, in some embodiments, the candidate cell configuration information may also include a cell type of the candidate cell and/or a cell configuration activation state (such as activation or deactivation) of the candidate cell. In another embodiment, the cell type of the candidate cell and/or the cell configuration activation state of the candidate cell may not be included by the candidate cell configuration information, but may be separately configured by the network device to the terminal device.

In an embodiment of the present disclosure, the network device may indicate at least one piece of candidate cell configuration information to the terminal device through a radio resource control (RRC) message. The RRC message may be, for example, an RRC reconfiguration message.

In step 202, a change signaling is transmitted to the terminal device, where the change signaling is used for at least one of: activating or deactivating the at least one piece of candidate cell configuration information; or changing specific configuration content corresponding to the at least one piece of candidate cell configuration information.

In an embodiment of the present disclosure, the change signaling may include at least one of:
at least one second indication information used to indicate the at least one piece of candidate cell configuration information to be changed;
an activation state to be changed to and corresponding to the at least one piece of candidate cell configuration information to be changed; or
specific configuration content to be changed to and corresponding to the at least one piece of candidate cell configuration information to be changed, where the specific configuration content to be changed to includes a cell type to be changed to and/or a cell configuration activation state to be changed to.

In this way, the terminal device changes the candidate cell configuration information based on the change signaling transmitted by the network device, thereby ensuring rapid change of the candidate cell configuration information, and ensuring the changed configuration information of the network device and the terminal device to maintain consistency, that is, making the network device and the terminal device have a consistent understanding of the changed candidate cell configuration information.

In an embodiment of the present disclosure, the change signaling may include at least one of:
a layer 1 (L 1) signaling (such as a downlink control information (DCI) signaling); or
a layer 2 (L2) signaling (such as a media access control-control element (MAC CE) signaling).

In addition, the specific execution process of step 202 will be introduced in detail in subsequent embodiments.

To sum up, according to the method for cell configuration provided by the embodiments of the present disclosure, the network device may indicate at least one piece of candidate cell configuration information to the terminal device, and may transmit the change signaling to the terminal device, where the change signaling is used to activate or deactivate the at least one piece of candidate cell configuration information, and/or to change the specific configuration content corresponding to the at least one piece of candidate cell configuration information. That is to say, in the embodiments of the present disclosure, the network device instructs the terminal device to change the candidate cell configuration information by transmitting the change signaling to the terminal device, thereby quickly changing the candidate cell configuration information. In the embodiments of the present disclosure, when the network device instructs the terminal device to change the candidate cell configuration information via the change signaling, the network device and the terminal device can have a common understanding of a candidate cell to be changed, and the activation state to be changed to and/or the specific configuration content to be changed to of the candidate cell to be changed based on the change signaling, thereby ensuring the network device and the terminal device to have a consistent understanding of the candidate cell configuration information after the change.

FIG. 3 is a schematic flowchart of a method for cell configuration provided by an embodiment of the present disclosure. The method is performed by a network device. As shown in FIG. 3, the method for cell configuration may include the following steps.

In step 301, an associated cell identifier is configured for the at least one piece of candidate cell configuration information, to associate the at least one piece of candidate cell configuration information with a candidate cell corresponding to the associated cell identifier.

In an embodiment of the present disclosure, the cell identifier associated with the candidate cell configuration information may be included in the candidate cell configuration information, both of which are configured to the terminal device together. Alternatively, the cell identifier may not be included in the candidate cell configuration information and is configured individually on terminal device.

In an embodiment of the present disclosure, a plurality of pieces of candidate cell configuration information may be associated with the same cell identifier. For example, cell identifier-1 may be associated with candidate cell configuration information ServingCellConfig-1 and candidate cell configuration information ServingCellConfig-2.

In another embodiment of the present disclosure, each candidate cell configuration information may be associated with a unique cell identifier. For example, cell identifier-1 may be associated with candidate cell configuration information ServingCellConfig-1, and cell identifier-2 may be associated with candidate cell configuration information ServingCellConfig-2.

To sum up, according to the method for cell configuration provided by the embodiments of the present disclosure, the network device may indicate at least one piece of candidate cell configuration information to the terminal device, and may transmit a change signaling to the terminal device, where the change signaling is used to activate or to deactivate the at least one piece of candidate cell configuration information, and/or to change the specific configuration content corresponding to the at least one piece of candidate cell configuration information. That is to say, in the embodiments of the present disclosure, the network device instructs the terminal device to change the candidate cell configuration information by transmitting the change signaling to the terminal device, thereby quickly changing the candidate cell configuration information. In the embodiments of the present disclosure, when the network device instructs the terminal device to change the candidate cell configuration information via the change signaling, the network device and the terminal device can have a common understanding of, based on the change signaling, a candidate cell to be changed, and an activation state after the change and/or specific configuration content after the change of the candidate cell to be changed, thereby ensuring the network device and the terminal device to have a consistent understanding of the candidate cell configuration information after the change.

FIG. 4 is a schematic flowchart of a method for cell configuration provided by an embodiment of the present disclosure. The method is performed by a network device. As shown in FIG. 4, the method for cell configuration may include the following steps.

In step 401, spatial relationship configuration is indicated to the terminal device, where the spatial relationship configuration includes at least one first indication information used to indicate a candidate cell.

In an embodiment of the present disclosure, the network device usually configures a specific spatial relationship configuration for a physical channel (such as a physical downlink shared channel (PDSCH) or a physical uplink shared channel (PUSCH)) of the terminal device, to indicate spatial relationship information corresponding to the physical channel of the terminal device. A spatial relationship between the physical channel of the terminal device and at least one candidate cell is indicated by configuring the spatial relationship configuration to include the at least one first indication information used to indicate the candidate cell.

In an embodiment of the present disclosure, the spatial relationship configuration may include at least one of: transmission configuration indication state (TCI-state) configuration; or Quasi co-location info (QCL-Info) configuration.

Further, in an embodiment of the present disclosure, the first indication information may include at least one of:
a cell identifier corresponding to the candidate cell (for example, the cell identifier is ServCellIndex);
a cell type identifier corresponding to the candidate cell (cell type identifier includes one or more of identifiers such as a primary cell (PCell) identifier, a primary secondary cell (PSCell) identifier, a secondary cell (SCell) identifier, and a special cell (SpCell));
a SCell identifier corresponding to the candidate cell with a cell type of SCell (for example, the SCell identifier is SCellIndex);
a candidate cell group identifier corresponding to the candidate cell (for example, the candidate cell group identifier is a master cell group (MCG) identifier or a secondary cell group (SCG) identifier);
a frequency point corresponding to the candidate cell (for example, absolute radio frequency channel number (ARFCN)); or
a physical cell identifier corresponding to the candidate cell (for example, physical cell identifier (PCI)).

To sum up, according to the method for cell configuration provided by the embodiments of the present disclosure, the network device may indicate at least one piece of candidate cell configuration information to the terminal device, and may transmit the change signaling to the terminal device, where the change signaling is used to activate or deactivate the at least one piece of candidate cell configuration information, and/or to change specific configuration content corresponding to the at least one piece of candidate cell configuration information. That is to say, in the embodiments of the present disclosure, the network device instructs the terminal device to change the candidate cell configuration information by transmitting the change signaling to the terminal device, so as to realize rapid change of the candidate cell configuration information. In the embodiments of the present disclosure, when the network device instructs the terminal device to change the candidate cell configuration information via the change signaling, the network device and the terminal device can have a common understanding of the candidate cell to be changed, and an activation state to be changed to and/or specific configuration content to be changed to of the candidate cell to be changed based on the change signaling, so as to ensure the network device and the terminal device to have a consistent understanding of the candidate cell configuration information after the change.

FIG. 5a is a schematic flowchart of a method for cell configuration provided by an embodiment of the present disclosure. The method is performed by a network device. As shown in FIG. 5a, the method for cell configuration may include the following steps.

In step 501a, at least one piece of candidate cell configuration information is indicated to a terminal device, where the candidate cell configuration information includes default configuration information and/or additional configuration information.

In an embodiment of the present disclosure, the default configuration information and/or additional configuration information may be used to indicate specific configuration content corresponding to the candidate cell configuration information, where the specific configuration content includes a cell type and/or a cell configuration activation state corresponding to the candidate cell configuration information. The cell type may include at least one of: PCell; PSCell; SpCell; SCell; master cell group secondary cell (MCG SCell); or secondary cell group secondary cell (SCG SCell). The cell configuration activation state may include activation or deactivation.

In an embodiment of the present disclosure, the manner of the network device indicating to the terminal device the cell type and/or the cell configuration activation state corresponding to the candidate cell configuration information may include at least one of the following manners.

The cell type and/or the cell configuration activation state is configured for the candidate cell by configuring the candidate cell configuration information to include the default configuration information, where the default configuration information indicates the default cell type and/or the default cell configuration activation state corresponding to the candidate cell, Specifically, the default configuration information may be, for example, spCellConfig. The spCellConfig may indicate that the default cell type is PCell or PSCell and the default cell configuration activation state is activation. Alternatively, the default configuration information may be, for example, sCellToAddModList, and sCellToAddModList may indicate that the default cell type is SCell. Based on this, for example, when the candidate cell configuration information ServingCellConfig-1 includes sCellToAddModList, it means that a cell type configured in the candidate cell configuration information defaults to SCell.

The cell type and/or the cell configuration activation state is configured for the candidate cell by configuring the candidate cell configuration information to include the additional configuration information; where the additional configuration information includes the cell type and/or the cell configuration activation state configured by the network device for the candidate cell. For example, the additional configuration information may be additional Cell Config

Furthermore, it should be noted that in an embodiment of the present disclosure, in addition to the cell type and/or cell configuration activation state corresponding to the candidate cell, the additional configuration information may include other configuration contents corresponding to the candidate cell, for example, a cell identifier associated with the candidate cell, a configuration identifier corresponding to the candidate cell configuration information, and a time-frequency resource corresponding to the candidate cell.

It should be noted that in an embodiment of the present disclosure, in response to a certain candidate cell configuration information corresponding to the default configuration information, a cell type corresponding to the candidate cell configuration information is implicitly indicated as being unable to be changed. For example, if the candidate cell configuration information ServingCellConfig-1 corresponds default configuration information spCellConfig, and the default configuration information spCellConfig indicates that an initial state is activation and a cell type is PCell, it is implicitly indicated that the cell type in the candidate cell configuration information ServingCellConfig-1 is unable to be changed subsequently. For example, the cell type in the candidate cell configuration information ServingCellConfig-1 cannot be changed from PCell to SCell.

To sum up, according to the method for cell configuration provided by the embodiments of the present disclosure, the network device may indicate at least one piece of candidate cell configuration information to the terminal device, and may transmit a change signaling to the terminal device, where the change signaling is used to activate or deactivate the at least one piece of candidate cell configuration information, and/or to change the specific configuration content corresponding to the at least one piece of candidate cell configuration information. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of the candidate cell to be changed, and the activation state to be changed to and/or the specific configuration content to be changed to of the candidate cell to be changed based on the change signaling, so as to ensure the network device and the terminal device to have a consistent understanding of the candidate cell configuration information after the change.

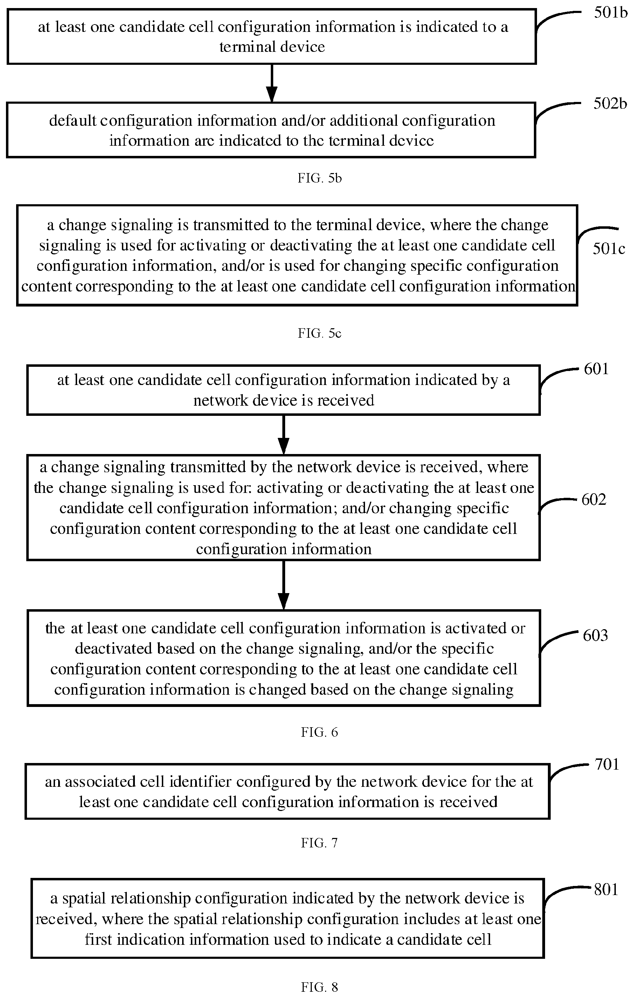

FIG. 5b is a schematic flowchart of a method for cell configuration provided by an embodiment of the present disclosure. The method is performed by a network device. As shown in FIG. 5b, the method for cell configuration may include the following steps.

In step 501b, at least one piece of candidate cell configuration information is indicated to a terminal device.

In step 502b, default configuration information and/or additional configuration information are indicated to the terminal device.

In an embodiment of the present disclosure, the default configuration information and/or the additional configuration information are not included in the candidate cell configuration information, but are additionally configured to the terminal device.

For detailed description of steps 501b and 502b, reference can be made to the descriptions in the above embodiments.

To sum up, according to the method for cell configuration provided by the embodiments of the present disclosure, the network device may indicate at least one piece of candidate cell configuration information to the terminal device, and may transmit a change signaling to the terminal device, where the change signaling is used to activate or deactivate the at least one piece of candidate cell configuration information, and/or to change specific configuration content corresponding to the at least one piece of candidate cell configuration information. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of the candidate cell to be changed, and an activation state to be changed to and/or the specific configuration content to be changed to of the candidate cell to be changed based on the change signaling, so as to ensure the network device and the terminal device to have a consistent understanding of the candidate cell configuration information after the change.

FIG. 5c is a schematic flowchart of a method for cell configuration provided by an embodiment of the present disclosure. The method is performed by a network device. As shown in FIG. 5c, the method for cell configuration may include the following steps.

In step 501c, a change signaling is transmitted to the terminal device, where the change signaling is used for activating or deactivating the at least one piece of candidate cell configuration information, and/or is used for changing specific configuration content corresponding to the at least one piece of candidate cell configuration information.

In an embodiment of the present disclosure, the change signaling may include at least one of:
at least one second indication information used to indicate the at least one piece of candidate cell configuration information to be changed;
an activation state to be changed to and corresponding to the at least one piece of candidate cell configuration information to be changed; or
specific configuration content to be changed to and corresponding to the at least one piece of candidate cell configuration information to be changed.

In an embodiment of the present disclosure, the above-mentioned second indication information should be information that can clearly indicate a candidate cell to be changed, so that terminal device can clearly and uniquely determine the candidate cell to be changed based on the second indication information subsequently. The second indication information may include a configuration identifier corresponding to the candidate cell configuration information to be changed; or may include a configuration identifier corresponding to the candidate cell configuration information to be changed and a cell identifier associated with the candidate cell configuration information to be changed; or may include a cell identifier associated with the candidate cell configuration information to be changed.

It should be noted that specific information included in the second indication information is determined based on whether the configuration identifier or the cell identifier mentioned above uniquely corresponds to the candidate cell.

Specifically, in an embodiment of the present disclosure, one candidate cell may be associated with at least one piece of candidate cell configuration information, each candidate cell configuration information corresponds to one configuration identifier, and each candidate cell corresponds to a cell identifier. Different candidate cells correspond to different cell identifiers (that is, the cell identifier can uniquely indicate the candidate cell). Different candidate cell configuration information associated with one candidate cell correspond to different configuration identifiers, and candidate cell configuration information associated with different candidate cells correspond to the same configuration identifier or different configuration identifiers.

The above-mentioned case where different candidate cell configuration information associated with one candidate cell correspond to different configuration identifiers may be understood as that: configuration identifiers corresponding to different candidate cell configuration information associated with one candidate cell shall be different from each other. For example, candidate cell-1 is associated with two candidate cell configuration information, namely ServingCellConfig-1 and ServingCellConfig-2, and ServingCellConfig-1 and ServingCellConfig-1 shall correspond to different configuration identifiers.

Furthermore, the above-mentioned case where candidate cell configuration information associated with different candidate cells correspond to the same configuration identifier or different configuration identifiers may be understood as that: configuration identifiers corresponding to different candidate cell configuration information associated with different candidate cells may be the same, or different. For example, Candidate cell-1 is associated with two candidate cell configuration information, namely, ServingCellConfig-1 and ServingCellConfig-2, Candidate cell-2 is associated with two candidate cell configuration information, namely, ServingCellConfig-3 and ServingCellConfig-4. A configuration identifier of the ServingCellConfig-1 may be the same as a configuration identifier of the ServingCellConfig-3, and a configuration identifier of the ServingCellConfig-2 may be the same as a configuration identifier of the ServingCellConfig-4. Alternatively, all configuration identifiers of the ServingCellConfig-1, the ServingCellConfig-2, the ServingCellConfig-3, and the ServingCellConfig-4 may be different from each other.

On the basis of the above, in an embodiment of the present disclosure, in response to that the configuration identifier corresponding to the candidate cell configuration information to be changed uniquely corresponds to the candidate cell configuration information to be changed, the second indication information is configured to include the configuration identifier corresponding to the candidate cell configuration information to be changed. In a case where the configuration identifier corresponding to the candidate cell configuration information to be changed uniquely corresponds to the candidate cell configuration information to be changed, it means that there is no any other candidate cell having a configuration identifier corresponding to candidate cell configuration information that is the same as the configuration identifier corresponding to the candidate cell configuration information to be changed, and the configuration identifier corresponding to the candidate cell configuration information to be changed can uniquely indicate the candidate cell to be changed. In this case, the candidate cell to be changed can be uniquely indicated by configuring the second indication information to include the configuration identifier corresponding to the candidate cell configuration information to be changed.

For example, it is assumed that candidate cell-1 is associated with two candidate cell configuration information, namely, ServingCellConfig-1 and ServingCellConfig-2, and candidate cell-2 is associated with two candidate cell configuration information, namely, ServingCellConfig-3 and ServingCellConfig-4, where a configuration identifier of ServingCellConfig-1 is identifier-1, a configuration identifier of ServingCellConfig-2 is identifier-2, a configuration identifier of ServingCellConfig-3 is identifier-3, and a configuration identifier of ServingCellConfig-4 is identifier-4. That is, all the configuration identifiers of ServingCellConfig-1, ServingCellConfig-2, ServingCellConfig-3, and ServingCellConfig-4 are different from each other. Therefore, the configuration identifiers of ServingCellConfig-1, ServingCellConfig-2, ServingCellConfig-3, and ServingCellConfig-4 can uniquely correspond to ServingCellConfig-1, ServingCellConfig-2, ServingCellConfig-3, and ServingCellConfig-4, respectively. In this case, when the candidate cell to be changed is ServingCellConfig-1, the second indication information may be configured to include identifier-1 to uniquely indicate ServingCellConfig-1.

In another embodiment of the present disclosure, in response to that the configuration identifier corresponding to the candidate cell configuration information to be changed does not uniquely correspond to the candidate cell configuration information to be changed, the second indication information is configured to include the configuration identifier corresponding to the candidate cell configuration information to be changed, and a cell identifier associated with the configuration identifier corresponding to the candidate cell configuration information to be changed. In a case where the configuration identifier corresponding to the candidate cell configuration information to be changed does not uniquely correspond to the candidate cell configuration information to be changed, it means that there is another candidate cell having a configuration identifier corresponding to candidate cell configuration information that is the same as the configuration identifier corresponding to the candidate cell configuration information to be changed, and in this case, the configuration identifier corresponding to the candidate cell configuration information to be changed cannot uniquely indicate the candidate cell to be changed. In view of this, since the cell identifier is able to uniquely indicate the candidate cell, the second indication information is configured to include the configuration identifier corresponding to the candidate cell configuration information to be changed and the cell identifier associated with the candidate cell configuration information to be changed, to enable a combination of the two identifiers to uniquely indicate the candidate cell to be changed.

For example, it is assumed that candidate cell-1 is associated with two candidate cell configuration information, namely, ServingCellConfig-1 and ServingCellConfig-2, and candidate cell-2 is associated with two candidate cell configuration information, namely, ServingCellConfig-3 and ServingCellConfig-4, where a cell identifier of candidate cell-1 is Cell#1, and a cell identifier of candidate cell-2 is Cell#2; a configuration identifier of ServingCellConfig-1 is identifier-1, a configuration identifier of ServingCellConfig-2 is identifier-2, a configuration identifier of ServingCellConfig-3 is identifier-1, and a configuration identifier of ServingCellConfig-4 is identifier-2. That is, the configuration identifiers of ServingCellConfig-1 and ServingCellConfig-3 are the same, and the configuration identifiers of ServingCellConfig-2 and ServingCellConfig-4 are the same. In this case, when the candidate cell to be changed is ServingCellConfig-1, since the configuration identifier of ServingCellConfig-1 is the same as the configuration identifier of ServingCellConfig-3, the configuration identifier of ServingCellConfig-1 cannot uniquely indicate ServingCellConfig-1. Therefore, the second indication information is configured to include the configuration identifier of ServingCellConfig-1 and cell identifier Cell#1 of a candidate cell associated with ServingCellConfig-1, thereby uniquely indicating ServingCellConfig-1.

In another embodiment of the present disclosure, in response to that the cell identifier associated with the candidate cell configuration information to be changed is only associated with the candidate cell configuration information to be changed, the second indication information is configured to include the cell identifier associated with the candidate cell configuration information to be changed. When the cell identifier associated with the candidate cell configuration information to be changed is only associated with the candidate cell configuration information to be changed, it means that a candidate cell associated with the candidate cell configuration information to be changed uniquely corresponds to the candidate cell configuration information to be changed. In this case, the corresponding candidate cell configuration information to be changed can be uniquely determined based on the cell identifier. Therefore, the candidate cell to be changed is uniquely indicated by configuring the second indication information to include the cell identifier associated with the candidate cell configuration information to be changed.

For example, it is assumed that candidate cell-1 is associated with one candidate cell configuration information, which is ServingCellConfig-1, and candidate cell-2 is associated with one candidate cell configuration information, which is ServingCellConfig-2, where a cell identifier of candidate cell-1 is Cell#1, and a cell identifier of candidate cell-2 is Cell#2. In this case, when the candidate cell to be changed is ServingCellConfig-1, ServingCellConfig-1 may be uniquely indicated by configuring the second indication information to include the cell identifier Cell#1 of a candidate cell associated with ServingCellConfig-1.

In an embodiment of the present disclosure, an activation state to be changed to and corresponding to the candidate cell configuration information to be changed may be activation or deactivation. When the activation state to be changed to and corresponding to the candidate cell configuration information to be changed is "activation", the network device and the terminal device are instructed to manage a candidate cell associated with activated candidate cell configuration information based on the activated candidate cell configuration information (for example, if a cell configuration activation state included in the activated candidate cell configuration information is activation and a cell type is Pcell, then a candidate cell associated with the activated candidate cell configuration information is determined as activated Pcell). When the activation state to be changed to and corresponding to the candidate cell configuration information to be changed is "deactivation", the network device and the terminal device are instructed to manage the cell associated with the activated candidate cell configuration information not based on the deactivated candidate cell configuration information.

Based on this, in an embodiment of the present disclosure, the change signaling may only include an activation state to be changed to and corresponding to one candidate cell configuration information, so as to indicate whether cell management is based on the one candidate cell configuration information. For example, it is assumed that candidate cell-1 is associated with two candidate cell configuration information, namely, ServingCellConfig-1 and ServingCellConfig-2, the change signaling may be used to indicate: activating the candidate cell configuration information ServingCellConfig-1, in this case, the network device and the terminal device may manage candidate cell-1 based on the ServingCellConfig-1; or, the change signaling may be used to indicate: deactivating the candidate cell configuration information ServingCellConfig-1, in this case, the network device and the terminal device manage candidate cell-1 not based on ServingCellConfig-1.

In another embodiment of the present disclosure, the change signaling may also include activation states to be changed to and corresponding to multiple candidate cell configuration information, so as to change multiple activated candidate cell configuration information corresponding to candidate cells. For example, it is assumed that candidate cell-1 is associated with two candidate cell configuration information, namely, ServingCellConfig-1 and ServingCellConfig-2, and currently ServingCellConfig-1 is in an activated state and ServingCellConfig-2 is in a deactivated state (that is, candidate cell-1 is currently managed based on ServingCellConfig-1). In this case, if the activated candidate cell configuration information corresponding to candidate cell-1 needs to be changed, the change signaling transmitted by the network device to the terminal device may include the following contents:
an activation state to be changed to and corresponding to the candidate cell configuration information ServingCellConfig-1 is "deactivation"; and
an activation state to be changed to and corresponding to the candidate cell configuration information ServingCellConfig-2 is "activation".

In this way, the network device and the terminal device may deactivate ServingCellConfig-1 and may activate ServingCellConfig-2 to change the candidate cell configuration information for managing candidate cell-1, and may use ServingCellConfig-2 to manage candidate cell-1.

Furthermore, in an embodiment of the present disclosure, specific configuration content to be changed to and corresponding to the at least one piece of candidate cell configuration information to be changed includes a cell type to be changed to and/or a cell configuration activation state to be changed to. When the change signaling indicates the cell type to be changed to and/or the cell configuration activation state to be changed to that correspond to the candidate cell configuration information to be changed, the terminal device may replace an original cell type and/or an original cell configuration activation state corresponding to the candidate cell to be changed with the cell type to be changed to and/or the cell configuration activation state to be changed to, so as to realize the change of the specific configuration content of the candidate cell configuration information to be changed.

In another embodiment of the present disclosure, the change signaling may also be used by the terminal device to change the spatial relationship configuration, such as replacing the cell type identifier corresponding to the candidate cell to be changed in the spatial relationship configuration with a candidate cell after the change corresponding to the candidate cell to be changed.

To sum up, according to the method for cell configuration provided by the embodiments of the present disclosure, the network device may indicate at least one piece of candidate cell configuration information to the terminal device, and may transmit a change signaling to the terminal device, where the change signaling is used to activate or deactivate the at least one piece of candidate cell configuration information, and/or to change the specific configuration content corresponding to the at least one piece of candidate cell configuration information. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of the candidate cell to be changed, and the activation state and/or the specific configuration content to be changed to of the candidate cell to be changed based on the change signaling, so as to ensure the network device and the terminal device to have a consistent understanding of the candidate cell configuration information after the change.

In addition, it should be noted that the above embodiments in FIG. 5a to FIG. 5c may be implemented in a combined manner. Specifically, in an embodiment, the above-mentioned embodiment of FIG. 5a may be combined with the embodiment of FIG. 5c. In this case, step 501a may be performed before step 501c. The default configuration information and/or the additional configuration information may be used to indicate an initial cell type and/or an initial cell configuration activation state of the candidate cell. The change signaling in step 501c may be used to activate or deactivate at least one piece of candidate cell configuration information indicated in step 501a, and/or the change signaling may be used to change the initial cell type and/or the initial activation state corresponding to at least one piece of candidate cell configuration information.

In another embodiment, the above-mentioned embodiment of FIG. 5b may be combined with the embodiment of FIG. 5c. In this case, steps 501b and 502b may be performed before step 501c. The default configuration information and /or the additional configuration information in step 502b may be used to indicate the initial cell type and/or the initial cell configuration activation state of the candidate cell, and the change signaling in step 501c may be used to activate or deactivate the at least one piece of candidate cell configuration information indicated in step 501b, and/or the change signaling may be used to change the cell type and/or the cell configuration activation state corresponding to the at least one piece of candidate cell configuration information.

FIG. 6 is a schematic flowchart of a method for cell configuration provided by an embodiment of the present disclosure. The method is performed by a terminal device. As shown in FIG. 6, the method for cell configuration may include the following steps.

In step 601, at least one piece of candidate cell configuration information indicated by a network device is received.

In step 602, a change signaling transmitted by the network device is received, where the change signaling is used for: activating or deactivating the at least one piece of candidate cell configuration information; and/or changing specific configuration content corresponding to the at least one piece of candidate cell configuration information.

In step 603, the at least one piece of candidate cell configuration information is activated or deactivated based on the change signaling, and/or the specific configuration content corresponding to the at least one piece of candidate cell configuration information is changed based on the change signaling.

For detailed description of steps 601 to 603, reference can be made to the descriptions in the above embodiments.

To sum up, according to the method for cell configuration provided by the embodiments of the present disclosure, the terminal device may receive at least one piece of candidate cell configuration information indicated by the network device; and may further receive the change signaling transmitted by the network device, where the change signaling is used for activating or deactivating the at least one piece of candidate cell configuration information; and/or changing specific configuration content corresponding to the at least one piece of candidate cell configuration information; and may change at least one piece of candidate cell configuration information based on the change signaling. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of, based on the change signaling, the candidate cell to be changed, and an activation state to be changed to and/or specific configuration content to be changed to of the candidate cell to be changed, so as to ensure the network device and the terminal device to have a consistent understanding of the candidate cell configuration information after the change.

FIG. 7 is a schematic flowchart of a method for cell configuration provided by an embodiment of the present disclosure. The method is performed by a terminal device. As shown in FIG. 7, the method for cell configuration may include the following steps.

In step 701, an associated cell identifier configured by the network device for the at least one piece of candidate cell configuration information is received.

For detailed description of step 701, reference can be made to the descriptions in the above embodiments.

To sum up, according to the method for cell configuration provided by the embodiments of the present disclosure, the terminal device may receive at least one piece of candidate cell configuration information indicated by a network device; and may further receive a change signaling transmitted by the network device, where the change signaling is used for activating or deactivating the at least one piece of candidate cell configuration information; and/or changing specific configuration content corresponding to the at least one piece of candidate cell configuration information; and may change at least one piece of candidate cell configuration information based on the change signaling. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of the candidate cell to be changed, and an activation state to be changed to and/or specific configuration content to be changed to of the candidate cell to be changed based on the change signaling, so as to ensure the network device and the terminal device to have a consistent understanding of the candidate cell configuration information after the change.

FIG. 8 is a schematic flowchart of a method for cell configuration provided by an embodiment of the present disclosure. The method is performed by a terminal device. As shown in FIG. 8, the method for cell configuration may include the following steps.

In step 801, a spatial relationship configuration indicated by the network device is received, where the spatial relationship configuration includes at least one first indication information used to indicate a candidate cell.

For detailed description of step 801, reference can be made to the descriptions in the above embodiments.

To sum up, according to the method for cell configuration provided by the embodiments of the present disclosure, the terminal device may receive at least one piece of candidate cell configuration information indicated by a network device; and may further receive a change signaling transmitted by the network device, where the change signaling is used for activating or deactivating the at least one piece of candidate cell configuration information; and/or changing specific configuration content corresponding to the at least one piece of candidate cell configuration information; and may change at least one piece of candidate cell configuration information based on the change signaling. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of, based on the change signaling, the candidate cell to be changed, and an activation state after the change and/or specific configuration content after the change of the candidate cell to be changed, thereby ensuring the network device and the terminal device to have a consistent understanding of the candidate cell configuration information after the change.

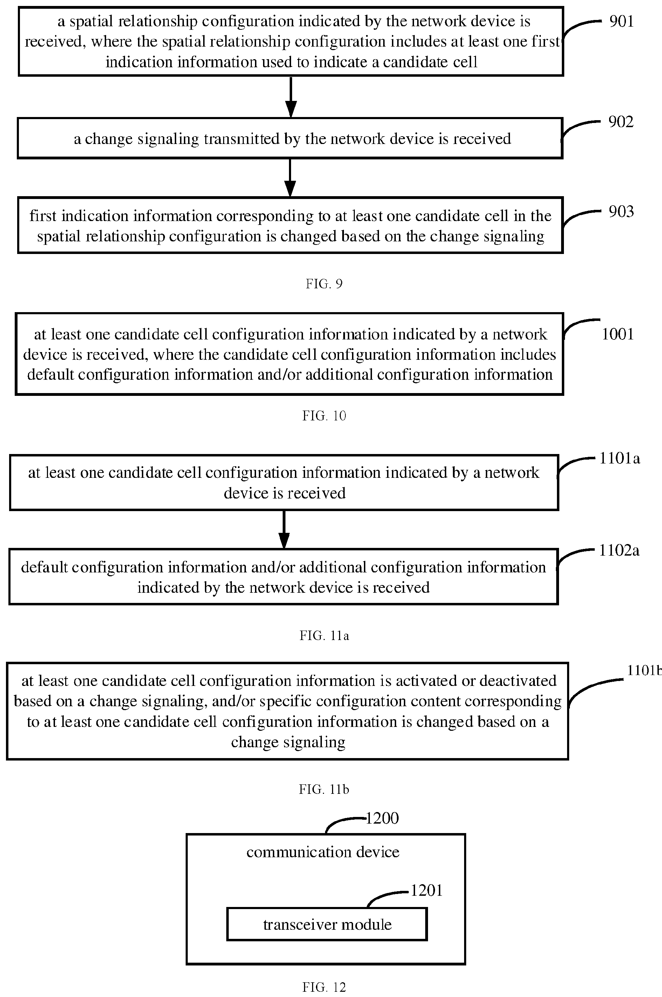

FIG. 9 is a schematic flowchart of a method for cell configuration provided by an embodiment of the present disclosure. The method is performed by a terminal device. As shown in FIG. 9, the method for cell configuration may include the following steps.

In step 901, a spatial relationship configuration indicated by the network device is received, where the spatial relationship configuration includes at least one first indication information used to indicate a candidate cell.

In step 902, a change signaling transmitted by the network device is received.

In step 903, first indication information corresponding to at least one candidate cell in the spatial relationship configuration is changed based on the change signaling.

For detailed description of steps 901 to 903, reference can be made to the descriptions in the above embodiments.

To sum up, according to the method for cell configuration provided by the embodiments of the present disclosure, the terminal device may receive at least one piece of candidate cell configuration information indicated by a network device; and may further receive a change signaling transmitted by the network device, where the change signaling is used for activating or deactivating the at least one piece of candidate cell configuration information; and/or changing specific configuration content corresponding to the at least one piece of candidate cell configuration information; and may change the at least one piece of candidate cell configuration information based on the change signaling. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of the candidate cell to be changed, and an activation state after the change and/or specific configuration content after the change of the candidate cell to be changed based on the change signaling, so as to ensure the network device and the terminal device to have a consistent understanding of the candidate cell configuration information after the change.

FIG. 10 is a schematic flowchart of a method for cell configuration provided by an embodiment of the present disclosure. The method is performed by a terminal device. As shown in FIG. 10, the method for cell configuration may include the following steps.

In step 1001, at least one piece of candidate cell configuration information indicated by a network device is received, where the candidate cell configuration information includes default configuration information and/or additional configuration information.

For detailed description of step 1001, reference can be made to the descriptions in the above embodiments.

To sum up, according to the method for cell configuration provided by the embodiments of the present disclosure, the terminal device may receive at least one piece of candidate cell configuration information indicated by a network device; and may further receive a change signaling transmitted by the network device, where the change signaling is used for activating or deactivating the at least one piece of candidate cell configuration information; and/or changing specific configuration content corresponding to the at least one piece of candidate cell configuration information; and may change the at least one piece of candidate cell configuration information based on the change signaling. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of the candidate cell to be changed, and an activation state after the change and/or specific configuration content after the change of the candidate cell to be changed based on the change signaling, so as to ensure the network device and the terminal device to have a consistent understanding of the candidate cell configuration information after the change.

FIG. 11a is a schematic flowchart of a method for cell configuration provided by an embodiment of the present disclosure. The method is performed by a terminal device. As shown in FIG. 11a, the method for cell configuration may include the following steps.

In step 1101a, at least one piece of candidate cell configuration information indicated by a network device is received.

In step 1102a, default configuration information and/or additional configuration information indicated by the network device is received.

For detailed description of steps 1101a and 1102a, reference can be made to the descriptions in the above embodiments.

To sum up, according to the method for cell configuration provided by the embodiments of the present disclosure, the terminal device may receive at least one piece of candidate cell configuration information indicated by a network device; and may further receive a change signaling transmitted by the network device, where the change signaling is used for activating or deactivating the at least one piece of candidate cell configuration information; and/or changing specific configuration content corresponding to the at least one piece of candidate cell configuration information; and may change the at least one piece of candidate cell configuration information based on the change signaling. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of the candidate cell to be changed, and an activation state to be changed to and/or specific configuration content to be changed to of the candidate cell to be changed based on the change signaling, so as to ensure the network device and the terminal device to have a consistent understanding of the candidate cell configuration information after the change.

FIG. 11b is a schematic flowchart of a method for cell configuration provided by an embodiment of the present disclosure. The method is performed by a terminal device. As shown in FIG. 11b, the method for cell configuration may include the following steps.

In step 1101b, at least one piece of candidate cell configuration information is activated or deactivated based on a change signaling, and/or specific configuration content corresponding to at least one piece of candidate cell configuration information is changed based on a change signaling.

To sum up, according to the method for cell configuration provided by the embodiments of the present disclosure, the terminal device may receive at least one piece of candidate cell configuration information indicated by a network device; and may further receive the change signaling transmitted by the network device, where the change signaling is used for activating or deactivating the at least one piece of candidate cell configuration information; and/or changing the specific configuration content corresponding to the at least one piece of candidate cell configuration information; and may change the at least one piece of candidate cell configuration information based on the change signaling. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of the candidate cell to be changed, and an activation state to be changed to and/or specific configuration content to be changed to of the candidate cell to be changed based on the change signaling, so as to ensure the network device and the terminal device to have a consistent understanding of the candidate cell configuration information after the change.

FIG. 12 is a schematic structural diagram of a communication device provided by an embodiment of the present disclosure. As shown in FIG. 12, the device 1200 may include: a transceiver module 1201, configured to indicate at least one piece of candidate cell configuration information to a terminal device; and transmit a change signaling to the terminal device, where the change signaling is used for at least one of: activating or deactivating the at least one piece of candidate cell configuration information; or changing specific configuration content corresponding to the at least one piece of candidate cell configuration information.

To sum up, according to the communication device provided by the embodiments of the present disclosure, the network device may indicate at least one piece of candidate cell configuration information to the terminal device, and may transmit the change signaling to the terminal device, where the change signaling is used to activate or deactivate the at least one piece of candidate cell configuration information, and/or to change the specific configuration content corresponding to the at least one piece of candidate cell configuration information. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of, based on the change signaling, the candidate cell to be changed, and an activation state to be changed to and/or specific configuration content to be changed to of the candidate cell to be changed, so as to ensure the network device and the terminal device to have a consistent understanding of the candidate cell configuration information after the change.

Optionally, in an embodiment of the present disclosure, the device is further configured to: configure an associated cell identifier for the at least one piece of candidate cell configuration information, to associate the at least one piece of candidate cell configuration information with a candidate cell corresponding to the associated cell identifier.

Optionally, in an embodiment of the present disclosure, a plurality of pieces of candidate cell configuration information are associated with the same cell identifier.

Optionally, in an embodiment of the present disclosure, each candidate cell configuration information is associated with a unique cell identifier.

Optionally, in an embodiment of the present disclosure, the device is further configured to: indicate spatial relationship configuration to the terminal device, where the spatial relationship configuration includes at least one first indication information used to indicate a candidate cell.

Optionally, in an embodiment of the present disclosure, the first indication information includes at least one of:
a cell identifier corresponding to the candidate cell;
a cell type identifier corresponding to the candidate cell;
a secondary cell (SCell) identifier corresponding to the candidate cell with a cell type of SCell;
a candidate cell group identifier corresponding to the candidate cell;
a frequency point corresponding to the candidate cell; or
a physical cell identifier corresponding to the candidate cell.

Optionally, in an embodiment of the present disclosure, the specific configuration content corresponding to the at least one piece of candidate cell configuration information includes a cell type and/or a cell configuration activation state corresponding to the at least one piece of candidate cell configuration information.

Optionally, in an embodiment of the present disclosure, the device is further configured to:
transmit default configuration information corresponding to the at least one piece of candidate cell configuration information to the terminal device, where the default configuration information is used to indicate a default cell type and/or a default cell configuration activation state corresponding to the at least one piece of candidate cell configuration information; and
transmit additional configuration information corresponding to the at least one piece of candidate cell configuration information to the terminal device, where the additional configuration information includes a cell type and/or a cell configuration activation state corresponding to the at least one piece of candidate cell configuration information indicated by the network device,
where the default configuration information and/or the additional configuration information are included in the at least one piece of candidate cell configuration information; or the default configuration information and/or the additional configuration information are additionally configured to the terminal device.

Optionally, in an embodiment of the present disclosure, the cell type includes at least one of:
primary cell (PCell);
primary secondary cell (PSCell);
special cell (SpCell);
secondary cell (SCell);
master cell group secondary cell (MCG SCell); or
secondary cell group secondary cell (SCG SCell),
where the cell configuration activation state includes activation or deactivation.

Optionally, in an embodiment of the present disclosure, in response to the at least one piece of candidate cell configuration information corresponding to the default configuration information, the cell type corresponding to the at least one piece of candidate cell configuration information is implicitly indicated as being unable to be changed.

Optionally, in an embodiment of the present disclosure, the change signaling includes at least one of: a layer 1 (L1) signaling; or a layer 2 (L2) signaling.

Optionally, in an embodiment of the present disclosure, the change signaling includes at least one of:
at least one second indication information used to indicate the at least one piece of candidate cell configuration information to be changed;
an activation state to be changed to and corresponding to the at least one piece of candidate cell configuration information to be changed; or
specific configuration content to be changed to and corresponding to the at least one piece of candidate cell configuration information to be changed, where the specific configuration content to be changed to includes a cell type to be changed to and/or a cell configuration activation state to be changed to.

Optionally, in an embodiment of the present disclosure, one candidate cell is associated with at least one piece of candidate cell configuration information, each candidate cell configuration information corresponds to one configuration identifier, and each candidate cell corresponds to one cell identifier; different candidate cells correspond to different cell identifiers, different candidate cell configuration information associated with one candidate cell correspond to different configuration identifiers, and candidate cell configuration information associated with different candidate cells correspond to the same configuration identifier or different configuration identifiers.

Optionally, in an embodiment of the present disclosure, the second indication information includes a configuration identifier corresponding to the at least one piece of candidate cell configuration information to be changed; or
the second indication information includes a configuration identifier corresponding to the at least one piece of candidate cell configuration information to be changed and a cell identifier associated with the at least one piece of candidate cell configuration information to be changed; or
the second indication information includes a cell identifier associated with the at least one piece of candidate cell configuration information to be changed.

Optionally, in an embodiment of the present disclosure, the device is further configured to: in response to the activation state to be changed to and corresponding to the at least one piece of candidate cell configuration information to be changed being activation, indicate that a candidate cell associated with the at least one piece of candidate cell configuration information activated is managed based on the at least one piece of candidate cell configuration information activated; and
in response to the activation state to be changed to and corresponding to the at least one piece of candidate cell configuration information to be changed being deactivation, indicate that a candidate cell associated with the at least one piece of candidate cell configuration information deactivated is managed not based on the at least one piece of candidate cell configuration information deactivated.

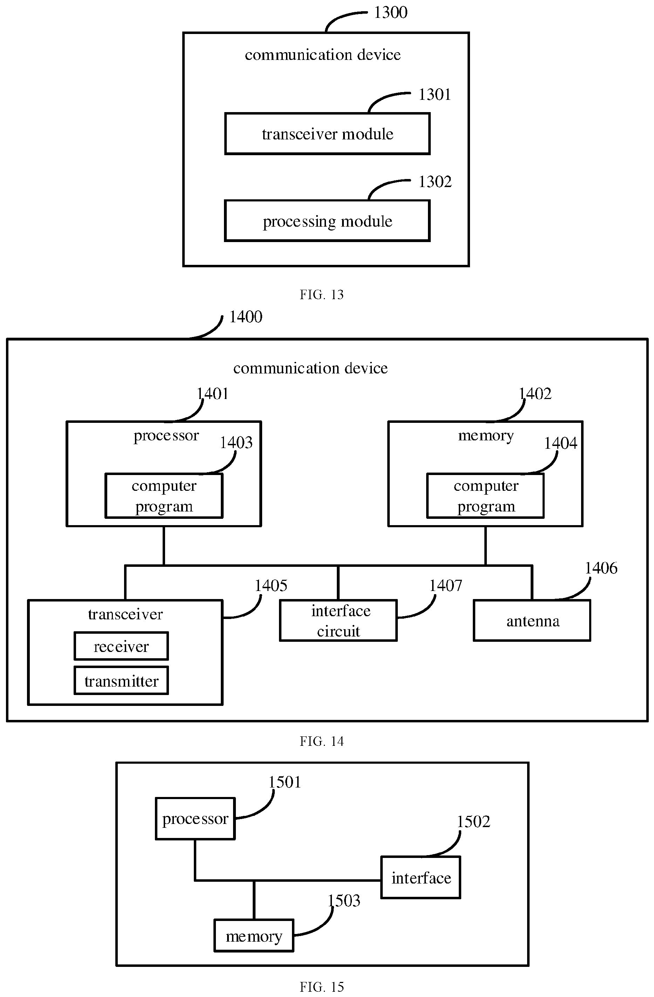

FIG. 13 is a schematic structural diagram of a communication device provided by an embodiment of the present disclosure. As shown in FIG. 13, the device 1300 may include:
a transceiver module 1301, configured to receive at least one piece of candidate cell configuration information indicated by a network device; and to receive a change signaling transmitted by the network device, where the change signaling is used for at least one of: activating or deactivating the at least one piece of candidate cell configuration information; or changing specific configuration content corresponding to the at least one piece of candidate cell configuration information; and
a processing module 1302, configured to activate or deactivate the at least one piece of candidate cell configuration information based on the change signaling, and/or change the specific configuration content corresponding to the at least one piece of candidate cell configuration information based on the change signaling.

To sum up, according to the communication device provided by the embodiments of the present disclosure, the terminal device may receive at least one piece of candidate cell configuration information indicated by the network device; and may further receive the change signaling transmitted by the network device, where the change signaling is used for activating or deactivating the at least one piece of candidate cell configuration information; and/or changing the specific configuration content corresponding to the at least one piece of candidate cell configuration information; and may change the at least one piece of candidate cell configuration information based on the change signaling. That is to say, in the embodiments of the present disclosure, the network device instructs the terminal device to change the candidate cell configuration information by transmitting the change signaling to the terminal device, thereby realizing rapid change of the candidate cell configuration information. In the embodiments of the present disclosure, when the network device instructs the terminal device to change the candidate cell configuration information via the change signaling, the network device and the terminal device can have a common understanding of the candidate cell to be changed, and an activation state to be changed to and/or specific configuration content to be changed to of the candidate cell to be changed based on the change signaling, so as to ensure the network device and the terminal device to have a consistent understanding of the candidate cell configuration information after the change.

Optionally, in an embodiment of the present disclosure, the device is further configured to: receive an associated cell identifier configured by the network device for the at least one piece of candidate cell configuration information.

Optionally, in an embodiment of the present disclosure, a plurality of pieces of candidate cell configuration information are associated with the same cell identifier.

Optionally, in an embodiment of the present disclosure, each candidate cell configuration information is associated with a unique cell identifier.

Optionally, in an embodiment of the present disclosure, the device is further configured to: receive a spatial relationship configuration indicated by the network device, where the spatial relationship configuration includes at least one first indication information used to indicate a candidate cell.

Optionally, in an embodiment of the present disclosure, the first indication information includes at least one of:
a cell identifier corresponding to the candidate cell;
a cell type identifier corresponding to the candidate cell;
a secondary cell (SCell) identifier corresponding to the candidate cell with a cell type of SCell;
a candidate cell group identifier corresponding to the candidate cell;
a frequency point corresponding to the candidate cell; or
a physical cell identifier corresponding to the candidate cell.

Optionally, in an embodiment of the present disclosure, the device is further configured to: change the first indication information corresponding to the at least one candidate cell in the spatial relationship configuration based on the change signaling.

Optionally, in an embodiment of the present disclosure, the specific configuration content corresponding to the at least one piece of candidate cell configuration information includes a cell type and/or a cell configuration activation state corresponding to the at least one piece of candidate cell configuration information.

Optionally, in an embodiment of the present disclosure, the device is further configured to:
receive default configuration information corresponding to the at least one piece of candidate cell configuration information, where the default configuration information is used to indicate a default cell type and/or a default cell configuration activation state corresponding to a candidate cell; and
receive additional configuration information corresponding to the at least one piece of candidate cell configuration information, where the additional configuration information includes a cell type and/or a cell configuration activation state corresponding to the at least one piece of candidate cell configuration information indicated by the network device,
where the default configuration information and/or the additional configuration information are included in the at least one piece of candidate cell configuration information; or the default configuration information and/or the additional configuration information are additionally configured to the terminal device.

Optionally, in an embodiment of the present disclosure, the cell type includes at least one of: PCell; PSCell; SpCell; SCell; MCG SCell; or SCG SCell, where the cell configuration activation state includes activation or deactivation.

Optionally, in an embodiment of the present disclosure, in response to the at least one piece of candidate cell configuration information corresponding to the default configuration information, the cell type corresponding to the at least one piece of candidate cell configuration information is implicitly indicated to be unable to be changed.

Optionally, in an embodiment of the present disclosure, the change signaling includes at least one of: an L1 signaling; or an L2 signaling.

Optionally, in an embodiment of the present disclosure, the change signaling includes at least one of:
at least one second indication information used to indicate the at least one piece of candidate cell configuration information to be changed;
an activation state to be changed to and corresponding to the at least one piece of candidate cell configuration information to be changed; or
specific configuration content to be changed to and corresponding to the at least one piece of candidate cell configuration information to be changed, where the specific configuration content to be changed to includes a cell type to be changed to and/or a cell configuration activation state to be changed to.

Optionally, in an embodiment of the present disclosure, one candidate cell is associated with at least one piece of candidate cell configuration information, each candidate cell configuration information corresponds to one configuration identifier, and each candidate cell corresponds to one cell identifier; different candidate cells correspond to different cell identifiers, different candidate cell configuration information associated with one candidate cell correspond to different configuration identifiers, and candidate cell configuration information associated with different candidate cells correspond to the same configuration identifier or different configuration identifiers.

Optionally, in an embodiment of the present disclosure, the second indication information includes a configuration identifier corresponding to the at least one piece of candidate cell configuration information to be changed; or
the second indication information includes a configuration identifier corresponding to the at least one piece of candidate cell configuration information to be changed and a cell identifier associated with the at least one piece of candidate cell configuration information to be changed; or
the second indication information includes a cell identifier associated with the at least one piece of candidate cell configuration information to be changed.

Optionally, in an embodiment of the present disclosure, the processing module is further configured to perform at least one of the following operations:
in response to the activation state to be changed to and corresponding to the at least one piece of candidate cell configuration information to be changed being activation, managing a candidate cell associated with the at least one piece of candidate cell configuration information activated based on the at least one piece of candidate cell configuration information activated; or
in response to the activation state to be changed to and corresponding to the at least one piece of candidate cell configuration information to be changed being deactivation, managing a candidate cell associated with the at least one piece of candidate cell configuration information deactivated not based on the at least one piece of candidate cell configuration information deactivated.

Referring to FIG. 14, FIG. 14 is a schematic structural diagram of a communication device 1400 provided by an embodiment of the present application. The communication device 1400 may be a network device or a terminal device, or may be a chip, a chip system, or a processor that supports the network device to implement the above method, or may be a chip, a chip system, or a processor that supports the terminal device to implement the above method. The communication device 1400 can be used to implement the methods described in the above method embodiments. For details, reference can be made to the description in the above method embodiments.

The communication device 1400 may include one or more processors 1401. The processor 1401 may be a general-purpose processor or a special-purpose processor, or the like. For example, the processor may be a baseband processor or a central processing unit. The baseband processor may be used to process communication protocols and communication data. The central processor may be used to control the communication device (such as a base station, a baseband chip, a terminal device, a chip of the terminal device, a DU or a CU, etc.), to execute the computer program, and to process data in the computer program.

Optionally, the communication device 1400 may also include one or more memories 1002, on which a computer program 1404 may be stored. The memory 1402 is configured to execute the computer program 1404 to cause the communication device 1400 to perform the methods described in the above method embodiments. Optionally, the memory 1402 may also store data. The communication device 1400 and the memory 1402 may be arranged separately or integrated together.

Optionally, the communication device 1400 may also include a transceiver 1405 and an antenna 1406. The transceiver 1405 may be referred to as a transceiver unit, a transceiver module, a transceiver circuit, etc., and is configured to implement receiving and transmitting functions. The transceiver 1405 may include a receiver and a transmitter. The receiver may be referred to as a receiver unit or a receiver circuit, etc., and configured to implement receiving function; the transmitter may be referred to as a transmitter unit, a transmitter circuit, etc., and configured to implement the transmitting function.

Optionally, the communication device 1400 may also include one or more interface circuits 1407. The interface circuit 1407 is configured to receive code instructions and transmit them to the processor 1401. The processor 1401 is configured to execute the code instructions to cause the communication device 1400 to perform the methods described in the above method embodiments.

In an implementation, the processor 1401 may include a transceiver for implementing receiving and transmitting functions. For example, the transceiver may be a transceiver circuit, an interface, or an interface circuit. The transceiver circuit, the interface or the interface circuit for implementing receiving and transmitting functions may be separated from each other or integrated together. The above-mentioned transceiver circuit, interface or interface circuit may be configured to read and write codes/data, or transmit or transfer signals.

In an implementation, the processor 1401 may store a computer program 1403, and the computer program 1403, when executed by the processor 1401, causes the communication device 1400 to perform the methods described in the above method embodiments. The computer program 1403 may be solidified in the processor 1401, in which case the processor 1401 may be implemented by hardware.

In an implementation, the communication device 1400 may include a circuit, and the circuit can implement the functions of transmitting, receiving, or communicating in the foregoing method embodiments. The processor and the transceiver described in the present application may be implemented in an integrated circuit (IC), an analog IC, a radio frequency integrated circuit (RFIC), a mixed signal IC, an application specific integrated circuits (ASIC), a printed circuit board ( printed circuit board (PCB), electronic equipment, etc. The processor and the transceiver may be manufactured using various IC process techniques, such as complementary metal oxide semiconductor (CMOS), N-channel Metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a terminal device, the scope of the communication device described in the present application is not limited thereto, and the structure of the communication device may not be limited by FIG. 15. The communication device may be a stand-alone device or may be a part of a larger device. For example, the communication device may be:
(1) an independent integrated circuit (IC), or chip, or chip system, or subsystem;
(2) a collection of one or more ICs, where, optionally, the IC collection may also include a storage component for storing data and a computer program;
(3)ASIC, such as modem;
(4) a module that can be embedded into other devices;
(5) a receiver, a terminal device, an intelligent terminal device, a cellular phone, a wireless equipment, a handheld device, a mobile unit, a vehicle-mounted equipment, a network device, a cloud equipment, an artificial intelligence equipment, etc.;
(6) other component(s), etc.

For the case where the communication device may be a chip or a chip system, reference may be made to a structural diagram of a chip as shown in FIG. 15. The chip as shown in FIG. 15 includes a processor 1501 and an interface 1502. The number of processors 1501 may be one or multiple, and the number of interfaces 1502 may be multiple.

Optionally, the chip 1500 further includes a memory 1503, and the memory 1503 is used to store necessary computer programs and data.

Those skilled in the art can also understand that various illustrative logical blocks and steps listed in the embodiments of the present disclosure can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present disclosure.

The present application further provides a readable storage medium, on which instructions are stored. When the instructions are executed by a computer, functions of any of the above method embodiments are implemented.

The present application further provides a computer program product. The computer program product is executed by a computer to implement functions of any of the above method embodiments.

The above embodiments may be implemented in whole or in part by software, hardware, firmware, or any combination thereof. When implemented by software, it may be implemented in whole or in part in the form of a computer program product. The computer program product includes one or more computer programs. When the computer program is loaded and executed by a computer, the processes or functions described in the embodiments of the present application are generated in whole or in part. The computer may be a general-purpose computer, a special-purpose computer, a computer network, or other programmable device. The computer program may be stored in or transferred from one computer-readable storage medium to another computer-readable storage medium. For example, the computer program may be transferred from a website, a computer, a server, or a data center to another website, computer, server or data center to another website, a computer, a server, or a data center to another website, computer, server or data center through wired means (such as coaxial cable, optical fiber, digital subscriber line (DSL)) or wireless means (such as infrared, wireless, microwave, etc.). The computer-readable storage medium may be any available medium that can be accessed by a computer or a data storage device integrated by one or more available media, which includes a server, a data center, and so on. The available media may be magnetic media (e.g., floppy disk, hard disk, magnetic tape), optical media (e.g., high-density digital video discs (DVD)), or semiconductor media (e.g., solid state disk (SSD)) etc.

Those of ordinary skill in the art may appreciate that numerical numbers such as first and second involved in the present application are only for convenience of description, and are not used to limit the scope of the embodiments of the present application, or to indicate the order.

At least one in the present application may also be described as one or more, and the plurality may be two, three, four or more, which are not limited by the present application. In the embodiments of the present application, technical features are distinguished by terms "first", "second", "third", "A", "B", "C", and "D", etc. The technical features described by the terms "first", "second", "third", "A", "B", "C" and "D" are not in an order of precedence or in an order of size.

The corresponding relationships shown in each table in the present application can be configured or predefined. The values of the information in each table are only examples and can be configured as other values, which is not limited by the present application. When the correspondence between information and each parameter is configured, it is not necessarily required to configure all the correspondences shown in each table. For example, in the table in the present application, the correspondences shown in some rows may not be configured. For another example, appropriate form adjustments can be made based on the above table, such as splitting, merging, etc. The names of the parameters shown in the titles of the above tables may also be other names understandable by the communication apparatus, and the values or expressions of the parameters may also be other values or expressions understandable by the communication apparatus. When implementing the above tables, other data structures can also be used, such as array, queue, container, stack, linear list, pointer, linked list, tree, graph, structure, class, heap, distributed table or hash table.

The term predefined in the present application may be understood as defined, pre-defined, storage, pre-storage, pre-negotiation, pre-configuration, solidification, or pre-burning.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solution. Those of ordinary skill in the art may implement the described functionality using different methods for each specific application, but such implementations should not be considered as exceeding the scope of the present application.

Those of ordinary skill in the art can clearly understand that for the convenience and simplicity of description, reference may be made to the corresponding processes in the foregoing method embodiments for the specific working processes of the systems, devices and units described above, which will not be described again here.

The above are only specific implementations of the present application, but the protection scope of the present application is not limited thereto. Changes or substitutions easily occurring to any person familiar with the technical field within the technical scope disclosed in the present application shall fall within the protection scope of the present disclosure. Therefore, the protection scope of the present application should be subject to the protection scope of the claims.

## Claims

1. A method for cell configuration, performed by a network device, comprising:
indicating at least one piece of candidate cell configuration information to a terminal device; and
transmitting a change signaling to the terminal device, wherein the change signaling is used for at least one of:
activating or deactivating the at least one piece of candidate cell configuration information; or
changing specific configuration content corresponding to the at least one piece of candidate cell configuration information.

2. The method according to claim 1, further comprising:
configuring an associated cell identifier for the at least one piece of candidate cell configuration information, to associate the at least one piece of candidate cell configuration information with a candidate cell corresponding to the associated cell identifier.

3. The method according to claim 2, wherein a plurality of pieces of candidate cell configuration information are associated with the same cell identifier.

4. The method according to claim 2, wherein each candidate cell configuration information is associated with a unique cell identifier.

5. The method according to claim 1, further comprising:
indicating spatial relationship configuration to the terminal device, wherein the spatial relationship configuration comprises at least one first indication information indicating a candidate cell.

6. The method according to claim 5, wherein the first indication information comprises at least one of:
a cell identifier corresponding to the candidate cell;
a cell type identifier corresponding to the candidate cell;
a secondary cell (SCell) identifier corresponding to the candidate cell with a cell type of SCell;
a candidate cell group identifier corresponding to the candidate cell;
a frequency point corresponding to the candidate cell; or
a physical cell identifier corresponding to the candidate cell.

7. The method according to claim 1, wherein the specific configuration content corresponding to the at least one piece of candidate cell configuration information comprises a cell type and/or a cell configuration activation state corresponding to the at least one piece of candidate cell configuration information.

8. The method according to claim 1, further comprising:
transmitting default configuration information corresponding to the at least one piece of candidate cell configuration information to the terminal device, wherein the default configuration information indicates a default cell type and/or a default cell configuration activation state corresponding to the at least one piece of candidate cell configuration information; and
transmitting additional configuration information corresponding to the at least one piece of candidate cell configuration information to the terminal device, wherein the additional configuration information comprises a cell type and/or a cell configuration activation state corresponding to the at least one piece of candidate cell configuration information indicated by the network device,
wherein the default configuration information and/or the additional configuration information are comprised in the at least one piece of candidate cell configuration information; or
the default configuration information and/or the additional configuration information are additionally configured to the terminal device.

9. The method according to claim 8, wherein the cell type comprises at least one of:
primary cell (PCell);
primary secondary cell (PSCell);
special cell (SpCell);
secondary cell (SCell);
master cell group secondary cell (MCG SCell); or
secondary cell group secondary cell (SCG SCell),
wherein the cell configuration activation state comprises activation or deactivation.

10. The method according to claim 8, wherein in response to the at least one piece of candidate cell configuration information corresponding to the default configuration information, the cell type corresponding to the at least one piece of candidate cell configuration information is implicitly indicated as being unable to be changed.

11. The method according to claim 1, wherein the change signaling comprises at least one of:
a layer 1 (L1) signaling; or
a layer 2 (L2) signaling.

12. The method according to claim 1, wherein the change signaling comprises at least one of:
at least one second indication information indicating the at least one piece of candidate cell configuration information to be changed;
an activation state to be changed to and corresponding to the at least one piece of candidate cell configuration information to be changed; or
specific configuration content to be changed to and corresponding to the at least one piece of candidate cell configuration information to be changed, wherein the specific configuration content to be changed to comprises a cell type to be changed to and/or a cell configuration activation state to be changed to.

13. The method according to claim 12, wherein one candidate cell is associated with at least one piece of candidate cell configuration information, each candidate cell configuration information corresponds to one configuration identifier, and each candidate cell corresponds to one cell identifier;
different candidate cells correspond to different cell identifiers, different candidate cell configuration information associated with one candidate cell correspond to different configuration identifiers, and candidate cell configuration information associated with different candidate cells correspond to the same configuration identifier or different configuration identifiers.

14. The method according to claim 12, wherein the second indication information comprises a configuration identifier corresponding to the at least one piece of candidate cell configuration information to be changed; or
the second indication information comprises a configuration identifier corresponding to the at least one piece of candidate cell configuration information to be changed and a cell identifier associated with the at least one piece of candidate cell configuration information to be changed; or
the second indication information comprises a cell identifier associated with the at least one piece of candidate cell configuration information to be changed.

15. The method according to claim 12, further comprising:
in response to the activation state to be changed to corresponding to the at least one piece of candidate cell configuration information to be changed being activation, indicating that a candidate cell associated with the at least one piece of candidate cell configuration information activated is managed based on the at least one piece of candidate cell configuration information activated; and
in response to the activation state to be changed to corresponding to the at least one piece of candidate cell configuration information to be changed being deactivation, indicating that a candidate cell associated with the at least one piece of candidate cell configuration information deactivated is managed not based on the at least one piece of candidate cell configuration information deactivated.

16. A method for cell configuration, performed by a terminal device, comprising:
receiving at least one piece of candidate cell configuration information indicated by a network device;
receiving a change signaling transmitted by the network device, wherein the change signaling is used for at least one of: activating or deactivating the at least one piece of candidate cell configuration information; or changing specific configuration content corresponding to the at least one piece of candidate cell configuration information; and
activating or deactivating the at least one piece of candidate cell configuration information based on the change signaling, and/or changing the specific configuration content corresponding to the at least one piece of candidate cell configuration information based on the change signaling.

17. The method according to claim 16, further comprising:
receiving an associated cell identifier configured by the network device for the at least one piece of candidate cell configuration information.

18. The method according to claim 17, wherein a plurality of pieces of candidate cell configuration information are associated with the same cell identifier.

19. The method according to claim 17, wherein each candidate cell configuration information is associated with a unique cell identifier.

20. The method according to claim 16, further comprising:
receiving a spatial relationship configuration indicated by the network device, wherein the spatial relationship configuration comprises at least one first indication information indicating a candidate cell.

21. The method according to claim 20, wherein the first indication information comprises at least one of:
a cell identifier corresponding to the candidate cell;
a cell type identifier corresponding to the candidate cell;
a secondary cell (SCell) identifier corresponding to the candidate cell with a cell type of SCell;
a candidate cell group identifier corresponding to the candidate cell;
a frequency point corresponding to the candidate cell; or
a physical cell identifier corresponding to the candidate cell.

22. The method according to claim 19, further comprising:
changing the first indication information corresponding to the at least one candidate cell in the spatial relationship configuration based on the change signaling.

23. The method according to claim 16, wherein the specific configuration content corresponding to the at least one piece of candidate cell configuration information comprises a cell type and/or a cell configuration activation state corresponding to the at least one piece of candidate cell configuration information.

24. The method according to claim 16, further comprising:
receiving default configuration information corresponding to the at least one piece of candidate cell configuration information, wherein the default configuration information indicates a default cell type and/or a default cell configuration activation state corresponding to a candidate cell; and
receiving additional configuration information corresponding to the at least one piece of candidate cell configuration information, wherein the additional configuration information comprises a cell type and/or a cell configuration activation state corresponding to the at least one piece of candidate cell configuration information indicated by the network device,
wherein the default configuration information and/or the additional configuration information are comprised in the at least one piece of candidate cell configuration information; or
the default configuration information and/or the additional configuration information are additionally configured to the terminal device.

25. The method according to claim 24, wherein the cell type comprises at least one of:
PCell;
PSCell;
SpCell;
SCell;
MCG SCell; or
SCG SCell,
wherein the cell configuration activation state comprises activation or deactivation.

26. The method according to claim 24, wherein in response to the at least one piece of candidate cell configuration information corresponding to the default configuration information, the cell type corresponding to the at least one piece of candidate cell configuration information is implicitly indicated to be unable to be changed.

27. The method according to claim 16, wherein the change signaling comprises at least one of:
an L1 signaling; or
an L2 signaling.

28. The method according to claim 16, wherein the change signaling comprises at least one of:
at least one second indication information indicating the at least one piece of candidate cell configuration information to be changed;
an activation state to be changed to and corresponding to the at least one piece of candidate cell configuration information to be changed; or
specific configuration content to be changed to and corresponding to the at least one piece of candidate cell configuration information to be changed, wherein the specific configuration content to be changed to comprises a cell type to be changed to and/or a cell configuration activation state to be changed to.

29. The method according to claim 28, wherein one candidate cell is associated with at least one piece of candidate cell configuration information, each candidate cell configuration information corresponds to one configuration identifier, and each candidate cell corresponds to one cell identifier;
different candidate cells correspond to different cell identifiers, different candidate cell configuration information associated with one candidate cell correspond to different configuration identifiers, and candidate cell configuration information associated with different candidate cells correspond to the same configuration identifier or different configuration identifiers.

30. The method according to claim 28, wherein the second indication information comprises a configuration identifier corresponding to the at least one piece of candidate cell configuration information to be changed; or
the second indication information comprises a configuration identifier corresponding to the at least one piece of candidate cell configuration information to be changed and a cell identifier associated with the at least one piece of candidate cell configuration information to be changed; or
the second indication information comprises a cell identifier associated with the at least one piece of candidate cell configuration information to be changed.

31. The method according to claim 28, wherein activating or deactivating the at least one piece of candidate cell configuration information based on the change signaling comprises at least one of:
in response to the activation state to be changed to corresponding to the at least one piece of candidate cell configuration information to be changed being activation, managing a candidate cell associated with the at least one piece of candidate cell configuration information activated based on the at least one piece of candidate cell configuration information activated; or
in response to the activation state to be changed to corresponding to the at least one piece of candidate cell configuration information to be changed being deactivation, managing a candidate cell associated with the at least one piece of candidate cell configuration information deactivated not based on the at least one piece of candidate cell configuration information deactivated.

32. A communication device, configured in a network device, comprising:
a transceiver module, configured to indicate at least one piece of candidate cell configuration information to a terminal device; and transmit a change signaling to the terminal device, wherein the change signaling is used for at least one of:
activating or deactivating the at least one piece of candidate cell configuration information; or
changing specific configuration content corresponding to the at least one piece of candidate cell configuration information.

33. A communication device, configured in a terminal device, comprising:
a transceiver module, configured to receive at least one piece of candidate cell configuration information indicated by a network device; and receive a change signaling transmitted by the network device, wherein the change signaling is used for at least one of: activating or deactivating the at least one piece of candidate cell configuration information; or changing specific configuration content corresponding to the at least one piece of candidate cell configuration information; and
a processing module, configured to activate or deactivate the at least one piece of candidate cell configuration information based on the change signaling, and/or change the specific configuration content corresponding to the at least one piece of candidate cell configuration information based on the change signaling.

34. A communication device, comprising a processor and a memory for storing a computer program, wherein the processor is configured to execute the computer program stored in the memory to cause the device to perform the method according to any one of claims 1 to 15, or the processor is configured to execute the computer program stored in the memory to cause the device to perform the method according to any one of claims 16 to 31.

35. A communication device, comprising: a processor and an interface circuit, wherein the interface circuit is configured to receive code instructions and transmit the same to the processor; and
the processor is configured to run the code instructions to perform the method according to any one of claims 1 to 15, or run the code instructions to perform the method according to any one of claims 16 to 31.

36. A computer-readable storage medium, configured to store instructions, wherein the instructions, when executed, cause the method according to any one of claims 1 to 15 to be implemented, or the instructions, when executed, cause the method according to any one of claims 16 to 31 to be implemented.
